# EUROPEAN PATENT SPECIFICATION

(11) **EP 0 446 530 B1**
(45) Date of publication and mention of the grant of the patent: **02.03.1994**
(21) Application number: 90313898.0
(22) Date of filing: 19.12.1990
(51) Int. Cl.: F16C 1/10, F16C 1/12

(54) **Clutch in the local station of a remote control assembly**
Kupplung in der Geberstation einer Fernbedienung
Embrayage pour station locale d'une commande à distance

(30) Priority: 14.03.1990 US 493713
(43) Date of publication of application: 18.09.1991
(73) Proprietor: TELEFLEX INCORPORATED, Limerick Pennsylvania 19468 (US)
(72) Inventor: Yanusko, David, Pottstown, Pennsylvania 19464 (US)
(74) Representative: Browne, Robin Forsythe, Dr.

(56) References cited:
- DE-A- 1 550 868
- DE-A- 3 125 249
- FR-A- 1 114 122
- FR-A- 2 407 391
- GB-A- 862 708
- US-A- 3 208 300

## Description

The subject invention relates to remote actuator assemblies having a flexible core element conduit. More particularly, the subject invention relates to clutch mechanism used to disengage the remote actuator.

### Description of Related Art

Remote actuators are used to change the position of an output device, e.g. a throttle, from a location removed from the output device. Flexible cables are often used to transmit the change in position of the remote actuator from the remote actuator to the output device. Remote actuators are typically found on vehicles and large pieces of machinery. One such remote actuator is disclosed in US-A-3,206,998, issued to Matz, Jr. et al on September 21, 1965 wherein the remote actuator is the steering wheel of an outboard motor. The local actuator is the engine mount and the output device is the motor/propellor. If the steering wheel were to become inoperable, the operator would have to disconnect the flexible cable at the engine mount and use the engine mount to steer the boat. This becomes cumbersome wherein the operator would need a set of tools handy and must take steps not to lose any parts while boating.

US-A-3,208,300 issued to Morse on September 28, 1965, discloses an invention which attempts to alleviate the messy problem of disconnecting the steering wheel from the engine mount of a boat. The steering wheel is connected to a pinion which transforms the rotational movement of the steering wheel into the linear movement of the flexible cable conduit via a moveable, pivotal rack. With this design, the operator need only to pivot the rack up and away from the pinion and the operator will be able to steer the boat from the engine mount.

DE-A-1550868 discloses an assembly for connecting a remote station to a local station wherein a clutch allows disengagement of the two stations when desired. This clutch, however, cannot correctly orient the local station with the remote station because the clutch teeth are symmetric and circumscribe the clutch.

This design, however, also has its disadvantages. First, the operator must disconnect the remote actuator, ie the steering wheel, by going to the remote actuator and disconnecting it. In certain applications, this is not desirable because the remote actuator will be distantly located or may be inaccessible by the operator of the local actuator. Much time and possibly more personnel are needed to disconnect the remote actuator. Second, this patent does not address the issue of orientation of the remote actuator. It may be necessary in some instances to know, when reconnecting the remote actuator, the actual orientation of the remote actuator to correctly ascertain the position of the output device. Third, none of the prior art discusses the remote actuator's ability to automatically reconnect itself in a manner as to properly display the correct orientation of the output device.

### SUMMARY OF THE INVENTION AND ADVANTAGES

The subject invention relates to a motion transmitting remote control assembly of the type for transmitting forces in a curved path by a flexible motion transmitting core element. This assembly comprises a flexible core element having first and second ends. Adjacent to and engagable with the first end of the flexible core element is the first actuator. The first actuator includes a drive member which is engagable with the flexible core element. The drive member is used to move and to be moved by the flexible core element. The first actuator further includes an input mechanism for moving the drive member and the flexible core element. The motion transmitting remote control assembly also includes a second actuator which is engagable with and adjacent to the second end of the flexible core element. The subject invention further includes a clutch which is disposed adjacent the input mechanism and the drive member. The clutch disengages the drive member and the flexible core element from the input mechanism. The assembly also includes engagement means for selectively engaging the clutch. The assembly is characterised by the engagement means including two concentric slots.

The subject invention's primary advantage is it allows the operation of a first actuator when the second actuator is damaged and/or immoveable. The operation of the first actuator may be done without having to go to the second actuator to disconnect it. In addition, the first actuator may be operated if the flexible conduit is, for some reason immoveable. Another advantage of the subject invention allows the second actuator to automatically reconnect itself in its proper orientation after it is desired to reconnect the second actuator.

### FIGURES IN THE DRAWINGS

Other advantages of the present invention will be readily appreciated as the same becomes better understood by reference to the following detailed description when considered in connection with the accompanying drawings wherein:
Figure 1 is a plan view of the subject invention with a portion of the flexible conduit cut away;
Figure 2 is a plan view of the second actuator with the wheel and the cover removed;
Figure 3 is a cross-sectional view of the second actuator taken along line 3-3;
Figure 4 is a plan view of the first actuator with the wheel and cover removed;
Figure 5 is a cross-sectional view of the first actuator taken along line 5-5 of Figure 4.

### DETAILED DESCRIPTION OF THE DRAWINGS

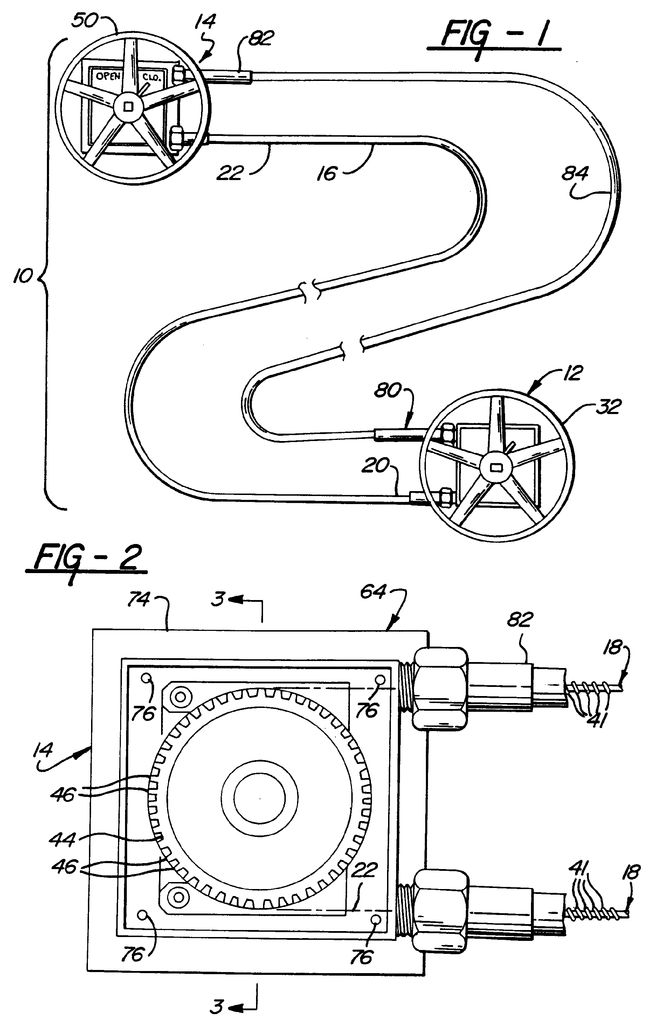

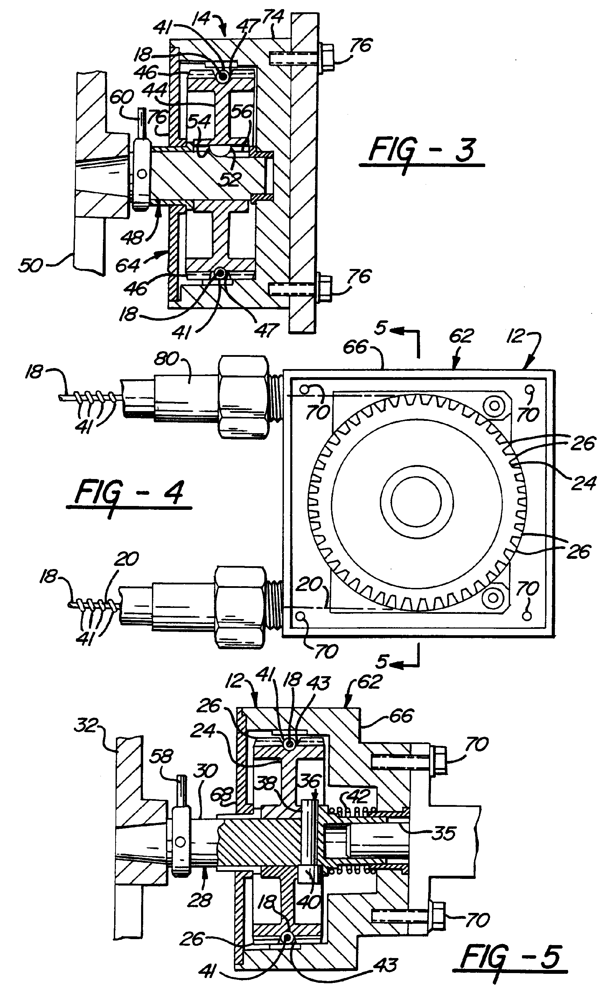

The subject invention is generally shown at 10 in Figure 1. The subject invention is a motion transmitting remote control assembly 10. The subject invention 10 comprises a first actuator 12 and a second actuator 14 connected together via flexible conduit 16. The flexible conduit 16 houses a flexible core element 18, as may be seen in Figures 2 and 4. The subject invention 10 is designed to allow the operation of an output device from two or more locations. It will be appreciated that more than two actuators, or stations, may be used when necessary. Only two actuators, however, will be described hereinafter to simplify the explanation of the subject invention 10.

The flexible core element 18 is covered by a flexible conduit 16 between the first actuator means 12 and the second actuator means 14. The flexible core element 18 has first 20 and second 22 ends. Figure 1 shows numerals 20, 22 pointing to the ends of the flexible conduit 16 for convenience.

The subject invention 10 further comprises second actuator means 14 which is engagable with said flexible core element 18 adjacent said second end 22. The second actuator means 14 is used for being moved by and for moving said flexible core element 18. A more complete description of the second actuator means 14 will be discussed subsequently.

The first actuator means 12 includes a first drive member 24. The first drive member 24 is a circular gear with gear teeth 26. The first drive member 24 engages the flexible core element 18. The first drive member 24 is adjacent the first end 20 of the flexible core element 18 and the first drive member 24 is moved by and moves the flexible core element 18. As is shown best in Figure 4, the flexible core element 18 is physically in contact with no more than one half of the first drive member 24.

The first actuator means 12 further includes first input means 28 for moving the first drive member 24 and the flexible core element 18. The first input means 28 includes a first input shaft 30 which extends through the first drive member 24. The first input means 28 further includes handle means 32 for imparting a torque on the first input shaft 30 to rotate the first input shaft 30. The handle means 32 may comprise any suitable device to enhance the operator's mechanical advantage. In the subject invention 10, the handle means 32 is a wheel 32 having a center on axis with the first input shaft 30.

The first input shaft 30 extends beyond the first drive means 24 and is in slidable contact with the output means 35. The output means 35 is an output shaft 35 which rotates in response to the rotation of the first input shaft 30. The end of the output shaft 35 is connected to a mechanism to be operated; the mechanism not being a part of the subject invention.

The subject invention 10 is characterized by clutch means 36 disposed adjacent the first input means 28 and the first drive member 24 for disengaging the first drive member 24 and the flexible core element 18 from the first input means 28. The clutch means 36 allows the first input means 28 to move without moving the first drive member 24 and/or the flexible core element 18.

The first drive member 24 further includes engagement means (not shown) for selectively engaging the clutch means 36. The engagement means comprises two concentric slots (not shown) wherein the center defining the concentricity of the two concentric slots is the center of the first drive member 24. In the preferred embodiment of the subject invention 10, the two concentric slots abut the first input shaft 30.

The clutch means 36 may further be defined as a pin 38 which is fixedly secured to the first input shaft 30. The pin 38 extends beyond the diameter of the first input shaft 30. In the subject invention 10, the pin 38 extends beyond the first input shaft 30 in both directions, as may be best seen in Figure 5. The two ends 40 of the pin 38 extend into the two concentric slots of the first drive member 24. Therefore, when the wheel 32 is turned in any direction, the first input shaft 30 will turn the pin 38. If the pin 38 extends through the two concentric slots of the first drive member 24 the first drive member 24 and the flexible core element 18 will move in direct relation to the movement of the wheel 32.

The first actuator 12 further includes spring means 42 for spring biasing the pin 38 into and against the first drive member 24. This allows the pin 38 to always engage the two concentric slots of the first drive member 24 when the two ends 40 of pin 38 align with the two concentric slots.

The flexible core element comprises a body 18 and a helical wrap 41 fixedly secured thereto. The helical wrap 41 is a wire that wraps around the body 18 in such a manner as to leave space between two adjacent wraps in the same manner as threads of a screw are wound around the shaft of the screw. The helical wrap 41 engages the teeth 26 of the first drive member 24. Thus, the helical wrap 41 of the flexible core element 18 assumes the role of a gear which moves and is moved by the first drive member 24. Each of the gear teeth 26 has a groove 43 in which the flexible core element 18 sits. The grooves 43 restrict the flexible core element 18 from disengaging the gear teeth 26.

Returning our attention to the second actuator means 14, a second drive member 44 may be seen in Figures 2 and 3. The second drive member 44 is similar to the first drive member 24 in that it comprises a circular gear 44 with gear teeth 46. Each of the gear teeth 46 has a groove 47 similar to the grooves 43 in the gear teeth 26, discussed above. The second end 22 of the flexible core element 18 is wrapped around the second drive member 44 of the second actuator means 14.

The second actuator means 14 further includes a second input means 48 which is fixedly secured and coaxial with the second drive member 44. The second input means 48 moves the second drive member 44 which, in turn, moves the flexible core element 18. The second input means 48 includes second handle means 50 fixedly secured to the second input means 48. The second handle means 50 applies a torque to the second input means 48 to move the second drive means 44 and the flexible core element 18. Absent environmental obstruction, the second handle means 50 may be rotated resulting in two different results depending upon the state of the first actuator means 12. In the first possibility, the movement of the second handle means 50 will move the flexible core element 18 which, in turn, will move the first drive member 24. In the first instance, if the clutch means 36 has engaged the two concentric slots of the first drive member 24, the first drive member 24 will rotate the first input shaft 30 of the first input means 28. This results with the wheel 32 turning in unison with the second handle means 50. In the second instance, the clutch means 36 has not engaged the two concentric slots. In this situation, the first drive member 24 will rotate until the two concentric slots align with the pin 38, at which point the clutch means 36 will engage the first drive member 24. Thus, the movement of the second handle means 50 has resulted in the realignment of the second handle means 50 and, at the same time, the second actuator means 14 has re-engaged itself with the first actuator means 12. Now, the second actuator means 14 can move the first input means 28 of the first actuator means 12.

The second drive member 44 includes key means 52 for providing no lost motion between the second handle means 50 and the second input means 48. The key means 52, which includes key 54 attached to the second drive member 44 and a slot 56 in the second input means 48, replaces the clutch means 36 in the first actuator means 12 because there is no need for the second handle means 50 to ever be disengaged from the second drive member 44.

Both the first 12 and second 14 actuator means further include a first 58 and second 60 pointer means. The first 58 and second 60 pointer means are fixedly secured to the first 28 and second 48 input means, respectively, for indicating the orientation of the output means 35.

The first 12 and second 14 actuator means further comprise first 62 and second 64 housing means fixedly secured thereto for protecting the first 12 and second 14 actuator means from adverse environmental conditions in which the subject invention 10 will be placed. The first housing means 62 comprises a metal box 66, cover 68, and fastener means 70. The fastener means 70 may be a set of screws or any other suitable fastener which will secure the first actuator means 12 to a support structure. The second housing means 64 comprises a second box 74, a second cover 77 and second fasteners 76. The fasteners 76 may be any suitable fasteners, e.g. screws, suitable for securing the second actuator means 14 to a support structure. The first housing means 62 further includes a first sleeve 80 for protecting the first end 20 of the flexible core element 18. The flexible core element 18 will extend into the first sleeve means 80 when the first input means 28 is rotated in a counter-clockwise fashion. Likewise, the second housing means 64 comprises a second sleeve member 82 fixedly secured to the second box 74 for housing the second end 22 of the flexible core element 18 when the second input means 48 is rotated in a clockwise fashion.

In an alternative embodiment, the first 20 and second 22 ends of the flexible core element are connected via additional flexible core element 84, as shown in phantom in Figure 1. The additional flexible core element 84 enables the first 12 and second 14 actuator means the ability to pull the flexible core element 18 or the additional flexible core element 84 regardless of the direction of the rotation of the first 28 and second 48 input means. In other words, the subject assembly 10 will never have to rely on the compression of the flexible core element 18 to move the output means 35 and will, therefore, be able to utilize a larger force.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

## Claims

1. A motion transmitting remote control assembly (10) of the type for transmitting forces in a curved path by a flexible motion transmitting core element, said assembly (10) comprising:
a flexible core element having first (20) and second (22) ends;
first actuator means (12) including a first drive member (24) engageable with said flexible core element (18) adjacent said first end (20) for being moved by and for moving said flexible core element (18), said first actuator means further including first input means (28) for moving said first drive member (24) and said flexible core element (18);
second actuator means (14) engageable with said flexible core element (18) adjacent said second end (22) for being moved by and for moving said flexible core element (18);
clutch means (36) disposed adjacent said first input means (28) and said first drive member (24) for disengaging said first drive member (24) and said flexible core element (18) from said first input means (28) to allow said first input means (28) to move without moving said first drive member (24) and said flexible core element (18);
engagement means for selectively engaging said clutch means (36);
said assembly characterized by said engagement means consisting of two slots concentric to the center of the first drive member (24).

2. An assembly (10) as set forth in claim 1 further characterized by output means (35) disposed adjacent said first drive member (24) and in slidable contact with said first input means (28) for responding to the rotation of said first input means (28).

3. An assembly (10) as set forth in claim 2 further characterized by said first input means (28) including a first shaft (30) extending through said first drive member (24) and surrounding a portion of said output means (35).

4. An assembly (10) as set forth in claim 3 further characterized by said first input means (28) including first handle means (32) for imparting a torque on said first input shaft (30) to rotate said first input shaft (30).

5. An assembly (10) as set forth in claim 4 further characterized by said first handle means (32) comprising a wheel (32) having a center on axis with said input shaft (30).

6. An assembly (10) as set forth in claim 5 further characterized by said clutch means (36) including a pin (38) fixedly secured to said first input shaft (30) and extending through said concentric slots.

7. An assembly (10) as set forth in claim 6 further characterized by said first (20) and said second ends (22) being connected by an additional flexible core element (84).

8. An assembly (10) as set forth in claim 7 further characterized by said first actuator having spring means (42) for spring biasing said pin (30) into and against said first drive member (24).

9. An assembly (10) as set forth in claim 8 further characterized by spring means (42) biasing said pin away from said output shaft (35).

10. An assembly (10) as set forth in claim 9 further characterized by first drive member (24) further comprising a circular gear (24) coaxial with said input shaft (30).

11. An assembly (10) as set forth in claim 10 further characterized by said flexible core element (18) having a helical wire wrapping for engaging said circular gear (24).

12. An assembly (10) as set forth in claim 11 further characterised by said flexible core element (18) physically contacting one-half of said circular gear (24).

13. An assembly (10) as set forth in claim 12 further characterized by said second actuator means (14) comprising a second drive member (44) for moving and for being moved by said flexible core element (18) adjacent said second end.

14. An assembly (10) as set forth in claim 13 further characterized by said second actuator means (14) further including second input means (48) fixedly secured to and coaxial with said second drive member (44) for moving said second drive member (44) and said flexible core element (18).

15. An assembly (10) as set forth in claim 14 further characterized by said second input means (48) including second handle means (50) fixedly secured to second input means (48) for applying a torque to said second input means (48) to move said drive member (44) and said flexible core element (18).

16. An assembly (10) as set forth in claim 15 further characterised by said second drive member (44) including key means (52) for providing no lost motion between said second drive member (44) and second input means (48).

17. An assembly (10) as set forth in claim 16 further characterized by first (58) and second (60) pointer means fixedly secured to said first (28) and second (48) input means, respectively, for indicating the orientation of said output means (35).

18. An assembly (10) as set forth in claim 17 further characterized by including first (62) and second (64) housing means fixedly secured to said first (12) and second (14) actuator means, respectively, for protecting said first (12) and second (14) actuator means from adverse environmental conditions in which said assembly (10) will be placed.

19. An assembly (10) as set forth in claim 18 further characterized by first and second sleeves attached to said first and second housing means, respectively, for protecting said flexible core element (18) as said first (20) and second (22) ends wrap around said first (24) and second, (44) drive members, respectively.

## Patentansprüche

1. Bewegungsübertragende Fernbedienungseinheit (10), welche Kräfte auf einem gekrümmten Weg unter Verwendung eines die Bewegung übertragenden flexiblen Übertragungselementes überträgt, welches eine Seele aufweist, und welche aufweist:
ein flexibles eine Seele aufweisendes Übertragungselement mit einem ersten Ende (20) und einem zweiten Ende (22);
eine erste Betätigungseinrichtung (12), welche ein erstes Antriebsteil (24) aufweist, welches mit dem flexiblen Übertragungselement (18) in der Nachbarschaft von dessen erstem Ende zusammenarbeitet, um durch das Übertragungselement (18) bewegt zu werden oder dieses zu bewegen, wobei die erste Betätigungseinrichtung ferner ein erstes Betätigungsmittel (18) aufweist, um das erste Antriebsteil (24) und das flexible Übertragungselement (18) zu bewegen;
eine zweite Betätigungseinrichtung (14), die mit dem flexiblen Übertragungselement (18) in der Nachbarschaft von dessen zweitem Ende (22) zusammenarbeitet, um durch das flexible Übertragungselement (18) betätigt zu werden oder dieses zu bewegen;
eine Kupplungseinrichtung (36), die in der Nachbarschaft des ersten Betätigungsteiles (24) und des ersten Antriebsteiles (24) angeordnet ist und dazu dient, das erste Antriebsteil (24) und das flexible Übertragungselement (18) von dem ersten Betätigungsteil (28) zu trennen, so daß sich das erste Betätigungsteil (28) bewegen kann, ohne daß das erste Antriebsteil (24) und das flexible Übertragungselement (18) bewegt werden;
und Einrückmittel zum wahlweisen Einrücken der Kupplungseinrichtung (36),
dadurch gekennzeichnet, daß die Einrückeinrichtung aus zwei Schlitzen besteht, die konzentrisch zum Mittelpunkt des ersten Antriebsteiles (24) verlaufen.

2. Fernbedienungseinheit (10) nach Anspruch 1, dadurch gekennzeichnet, daß in der Nachbarschaft des ersten Antriebsteiles (24) Abtriebsmittel (35) angeordnet sind, welche in verschiebbarer Berührung zu dem ersten Betätigungsmittel (28) stehen, so daß sie auf die Drehung des ersten Betätigungsmittels (28) ansprechen.

3. Fernbedienungseinheit (10) nach Anspruch 2, dadurch gekennzeichnet, daß das erste Betätigungsmittel (28) eine erste Welle (30) aufweist, welche sich durch das erste Antriebsteil (24) hindurch erstreckt und einen Abschnitt des Abtriebsmittels (35) umgibt.

4. Fernbedienungseinheit (10) nach Anspruch 3, dadurch gekennzeichnet, daß das erste Betätigungsmittel (28) eine erste Handhabe (32) aufweist, durch welche auf die erste Eingangswelle (30) ein Drehmoment ausgeübt wird, um die erste Eingangswelle (30) in Drehung zu versetzen.

5. Fernbedienungseinheit (10) nach Anspruch 4, dadurch gekennzeichnet, daß die Handhabe (32) ein Rad (32) aufweist, dessen Mittelpunkt auf der gleichen Achse liegt wie die Eingangswelle (30).

6. Fernbedienungseinheit (10) nach Anspruch 5, dadurch gekennzeichnet, daß die Kupplungseinrichtung (36) einen Stift (38) aufweist, der fest mit der ersten Eingangswelle (30) verbunden ist und sich durch die konzentrischen Schlitze hindurch erstreckt.

7. Fernbedienungseinheit (10) nach Anspruch 6, dadurch gekennzeichnet, daß das erste Ende (20) und das zweite Ende (22) durch ein zusätzliches flexibles eine Seele aufweisendes Übertragungselement (84) verbunden sind.

8. Fernbedienungseinheit (10) nach Anspruch 7, dadurch gekennzeichnet, daß die erste Betätigungseinrichtung Federmittel (42) aufweist, durch welche der Stift (38) elastisch gegen und in Anlage an das erste Antriebsteil (24) vorgespannt wird.

9. Fernbedienungseinheit (10) nach Anspruch 8, dadurch gekennzeichnet, daß Federmittel (42) vorgesehen sind, durch welche der Stift in Richtung von der Ausgangswelle (35) weg vorgespannt ist.

10. Fernbedienungseinheit (10) nach Anspruch 9, dadurch gekennzeichnet, daß das erste Antriebsteil (24) ferner einen kreisförmigen Zahnkranz (24) aufweist, der koaxial zur Eingangswelle (30) ist.

11. Fernbedienungseinheit (10) nach Anspruch 10, dadurch gekennzeichnet, daß das flexible Übertragungselement (18) eine durch einen schraubenförmigen Draht gebildete Umhüllung der Seele aufweist, welche mit dem kreisförmigen Zahnkranz (24) kämmt.

12. Fernbedienungseinheit nach Anspruch 11, dadurch gekennzeichnet, daß das flexible Übertragungselement (18) über den halben Umfang des kreisförmigen Zahnkranzes (24) mit diesem in körperlicher Berührung steht.

13. Fernbedienungseinheit (10) nach Anspruch 12, dadurch gekennzeichnet, daß die zweite Betätigungseinrichtung (14) ein zweites Antriebsteil (44) aufweist, durch welches das flexible Übertragungselement (18) bewegbar ist und das seinerseits durch das Übertragungselement in Bewegung versetzbar ist, wobei das zweite Antriebsteil in der Nachbarschaft des zweiten Endes des Übertragungselementes angeordnet ist.

14. Fernbedienungseinheit nach Anspruch 13, dadurch gekennzeichnet, daß die zweite Betätigungseinrichtung (14) ein zweites Betätigungsmittel (48) aufweist, welches in koaxialer Lage fest mit dem zweiten Antriebsteil (44) verbunden ist und dazu dient, das zweite Antriebsteil (44) und die flexible Übertragungselement (18) zu bewegen.

15. Fernbedienungseinheit (10) nach Anspruch 14, dadurch gekennzeichnet, daß das zweite Betätigungsmittel (48) eine zweite Handhabe (50) aufweist, die fest mit dem zweiten Betätigungsmittel (48) verbunden ist und dazu dient, auf das zweite Betätigungsmittel (48) ein Drehmoment auszuüben, um das genannte Antriebsteil (44) und das flexible Übertragungselement (18) zu bewegen.

16. Fernbedienungseinheit (10) nach Anspruch 15, dadurch gekennzeichnet, daß das zweite Antriebsteil (44) eine Feder/Nuteinrichtung (52) aufweist, durch welche eine spielfreie Drehmomentübertragung zwischen dem zweiten Antriebsteil (44) und dem zweiten Betätigungsmittel (48) gewährleistet ist.

17. Fernbedienungseinheit (10) nach Anspruch 16, dadurch gekennzeichnet, daß ein erster Zeiger (58) fest am ersten Betätigungsmittel (28) und ein zweiter Zeiger (60) fest am zweiten Betätigungsmittel (48) befestigt ist, welche die Stellung des Abtriebsmittels (35) anzeigen.

18. Fernbedienungseinheit (10) nach Anspruch 17, dadurch gekennzeichnet, daß an der ersten Betätigungseinrichtung (12) ein erstes Gehäuse (62) und an der zweiten Betätigungseinrichtung (14) ein zweites Gehäuse (64) befestigt sind, durch welche die erste Betätigungseinrichtung (12) bzw. die zweite Betätigungseinrichtung (14) gegen schädliche Umwelteinflüsse geschützt sind, denen die Fernbedienungseinheit (10) ausgesetzt ist.

19. Fernbedienungseinheit (10) nach Anspruch 18, dadurch gekennzeichnet, daß am ersten Gehäuse erste Hülsenabschnitte und am zweiten Gehäuse zweite Hülsenabschnitte vorgesehen sind, durch welche das flexible Übertragungselement (18) da geschützt ist, wo das erste Ende (20) auf das erste Antriebsteil (24) bzw. das zweite Ende (22) auf das zweite Antriebsteil (44) aufläuft.

## Revendications

1. Assemblage de commandes à distance (10) pour la transmission d'un mouvement, du type apte à transmettre des forces suivant une voie incurvée à l'aide d'un élément flexible formant corps de transmission du mouvement, ledit assemblage (10) comprenant :
- un élément flexible formant corps avec une première (20) et une seconde (22) extrêmités ;
- des premiers moyens de déclenchement (12) comprenant un premier membre d'entraînement (24) apte à venir en prise avec ledit élément flexible formant corps (18) à proximité de ladite première extrêmité (20) de manière à être déplacé par et pour provoquer un mouvement dudit élément flexible formant corps (18), les premiers moyens de déclenchement comprenant en outre des premiers moyens d'entrée (28) aptes à déplacer le premier membre d'entraînement (24) ainsi que l'élément flexible formant corps (18) ;
- des seconds moyens de déclenchement (14) aptes à venir en prise avec ledit élément flexible formant corps (18) à proximité de la seconde extrêmité (22) de façon à être déplacés par et à provoquer un mouvement de cet élément flexible formant corps (18) ;
- des moyens d'embrayage (36) disposés à proximité des premiers moyens d'entrée (28) et du premier membre d'entraînement (24) pour désolidariser le premier membre d'entraînement (24) et ledit élément flexible formant corps (18) d'avec lesdits premiers moyens d'entrée (28), pour permettre à ces premiers moyens d'entrée (28) de se déplacer sans entraîner de mouvement du premier membre d'entraînement (24) et de l'élément flexible formant corps (18) ; et
- des moyens de solidarisation aptes à sélectivement faire entrer en prise lesdits moyens d'embrayage (36), cet assemblage étant caractérisé en ce que lesdits moyens d'engagement consistent en deux fentes concentriques au centre du premier membre d'entraînement (24).

2. Assemblage (10) selon la revendication 1, caractérisé en outre par des moyens de sortie (35) disposés à proximité du premier membre d'entraînement (24) et en contact coulissant avec lesdits premiers moyens d'entrée (28) pour répondre à la rotation de ces premiers moyens d'entrée (28).

3. Assemblage (10) selon la revendication 2, caractérisé en outre en ce que lesdits premiers moyens d'entrée (28) comprennent un premier arbre (30) qui s'étend au travers du premier membre d'entraînement (24) et qui entoure une portion des moyens de sortie (35) précités.

4. Assemblage (10) selon la revendication 3, caractérisé en outre par le fait que lesdits premiers moyens d'entrée (28) comprennent des premiers moyens de préhension en formant poignée (32) permettant l'application d'un couple audit premier arbre d'entrée (30) afin de faire tourner ce premier arbre d'entrée (30).

5. Assemblage (10) selon la revendication 4, caractérisé en outre par le fait que lesdits premiers moyens formant poignée (32) comprennent un volant (32) dont un centre est en ligne avec l'axe dudit premier arbre (30).

6. Assemblage (10) selon la revendication 5, caractérisé en outre par le fait que lesdits moyens d'embrayage (36) comprennent un pion (38) monté fixe sur ledit premier arbre d'entrée (30) et s'étendant au travers desdites fentes concentriques.

7. Assemblage (10) selon la revendication 6, caractérisé en outre par le fait que lesdites première (20) et seconde (22) extrêmités sont connectées par un élément flexible additionnel formant corps (84).

8. Assemblage (10) selon la revendication 7, caractérisé en outre par le fait que ledit premier déclencheur possède des moyens formant ressort (42) aptes à solliciter élastiquement ledit pion (30) vers l'intérieur et à l'encontre du premier membre d'entraînement (24) précité.

9. Assemblage (10) selon la revendication 8, caractérisé en outre par le fait que lesdits moyens formant ressort (42) sollicitent ledit pion à distance de l'arbre de sortie (35) précité.

10. Assmeblage (10) selon la revendication 9, caractérisé en outre par le fait que le premier membre d'entraînement (24) comprend également un engrenage circulaire (24) coaxial à l'arbre d'entrée (30) précité.

11. Assemblage (10) selon la revendication 10, caractérisé en outre par le fait que l'élément flexible formant corps (18) possède un cable hélicoldal formant revêtement d'entourage apte à venir en prise avec ledit engrenage circulaire (24).

12. Assemblage (10) selon la revendication 11, caractérisé en outre par le fait que l'élément flexible formant corps (18) est en contact physique avec une moitié de l'engrenage circulaire (24).

13. Assemblage (10) selon la revendication 12, caractérisé en outre par le fait que lesdits moyens de déclenchement (14) comprennent un second membre d'entraînement (44) apte à déplacer et à être déplacé par ledit élément flexible formant corps (18) adjacent à la seconde extrêmité.

14. Assemblage (10) selon la revendication 13, caractérisé en outre par le fait que lesdits seconds moyens de déclenchement (14) comprennent de plus des seconds moyens d'entrée (48) montés fixes sur et coaxialement avec le second membre d'entraînement (44) pour déplacer ce second membre d'entraînement (44) et l'élément flexible formant corps (18).

15. Assemblage (10) selon la revendication 14, caractérisé en outre par le fait que lesdits seconds moyens d'entrée (48) comprennent des seconds moyens de préhension en formant poignée (50) montés fixes sur les seconds moyens d'entrée (48) de manière à appliquer un couple à ces seconds moyens d'entrée (48) pour déplacer ledit membre d'entraînement (44) ainsi que l'élément flexible formant corps (18).

16. Assemblage (10) selon la revendication 15, caractérisé en outre par le fait que ledit second membre d'entraînement (44) comprend des moyens formant clé (52) aptes à permettre un mouvement sans perte entre le second membre d'entraînement (44) et les seconds moyens d'entrée (48).

17. Assemblage (10) selon la revendication 16, caractérisé en outre par le fait que des premier (58) et second (60) moyens de pointage sont montés fixes sur lesdits premier (28) et second (48) moyens d'entrée, respectivement, pour indiquer l'orientation des moyens de sortie (35) précités.

18. Assemblage (10) selon la revendication 17, caractérisé en outre en ce qu'il comprend des premier (62) et second (64) moyens formant logement montés fixes sur lesdits premier (12) et second (14) moyens de déclenchement, respectivement, pour protéger lesdits premier (12) et second (14) moyens de déclenchement contre des conditions défavorables de l'environnement dans lequel ledit assemblage (10) est appelé à être placé.

19. Assemblage (10) selon la revendication 18, caractérisé en outre par une première et une seconde chemises attachées aux premier et second moyens formant logement, respectivement, et aptes à protéger ledit élément flexible formant corps (18) tandis lesdites première (20) et seconde (22) extrêmités entourent en s'enroulant lesdits premier (24) et second (44) membres d'entraînement, respectivement.
